Europäisches Patentamt

European Patent Office

Office européen des brevets

(11) Veröffentlichungsnummer: **0 244 579 B1**

# EUROPÄISCHE PATENTSCHRIFT

(45) Veröffentlichungstag der Patentschrift: **12.06.91**

(51) Int. Cl.5: **B60J 5/04**

(21) Anmeldenummer: **87102551.6**

(22) Anmeldetag: **24.02.87**

(54) Seitliche Fahrzeugtür.

(30) Priorität: **07.05.86 DE 3615436**

(43) Veröffentlichungstag der Anmeldung:
**11.11.87 Patentblatt 87/46**

(45) Bekanntmachung des Hinweises auf die
Patenterteilung:
**12.06.91 Patentblatt 91/24**

(84) Benannte Vertragsstaaten:
**DE FR GB IT SE**

(56) Entgegenhaltungen:
**DE-A- 2 409 619**
**DE-A- 2 524 633**
**FR-A- 2 391 893**
**GB-A- 1 441 598**

**Patent Abstracts of Japan, Band 5, N. 105
(M-77)(777), 8. Juli 1981**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Kleemann, Wolfgang
Uhdestrasse 2a
W-8130 Starnberg(DE)**
Erfinder: **Woite, Bernd, Dr.
Gabriel-Max-Strasse 66a
W-8000 München 90(DE)**
Erfinder: **Bolte, Ludwig
Keltenstrasse 25
W-8011 Kirchheim(DE)**
Erfinder: **Gürtler, Franz
Katharinenweg 14
W-8044 Unterschleissheim(DE)**

## Beschreibung

Die Erfindung bezieht sich auf eine seitliche Fahrzeugtür, insbesondere für Personenkraftwagen nach dem Oberbegriff des Hauptanspruchs (Siehe z.B die DE-A-2 409 619 oder die GB-A-1 441 598).

Bei einem Autounfall ist der Seitenaufprall für den Fahrzeuginsassen besonders kritisch. Die Stoßfront des gegnerischen Fahrzeuges dringt bei dieser Unfallart in die Tür ein und schiebt dabei sehr steife Einbauteile, wie Türöffnungs- und Fensterhebemechanismus vor sich her. Andererseits fällt durch die Beschleunigung des Aufpralls der Fahrzeuginsasse gegen die Türinnenseite und kann sich dabei erheblich durch die eindringenden Bauteile verletzen. Aus diesem Grunde werden Fahrzeugtüren an ihrer Innenseite gepolstert. Allerdings vermag die Polsterung heutiger Fahrzeuge nur geringe Kräfte aufzunehmen und vermindert das Verletzungsrisiko nicht wesentlich.

Einen Schritt weiter geht die DE-A- 2 409 619, die an der Türinnenseite im Bereich der Brüstung ein eingelagertes Deformationsglied vorsieht. Dieses Deformationsglied ist in der Lage, die Energie des auftreffenden Fahrzeuginsassen unter Verformung aufzuzehren, und damit die Beschleunigungswerte seines Körpers herabzusetzen. Allerdings ist die Ausgestaltung der Vorveröffentlichung nur im Brustbereich des Fahrzeuginsassen wirksam, während die übrigen Körperregionen nach wie vor dem erhöhten Verletzungsrisiko ausgesetzt sind.

Aufgrund seiner Anatomie weist der menschliche Körper Regionen unterschiedlicher Widerstandsfestigkeit auf. So vermögen die starken Beckenknochen erheblich größere Kräfte aufzunehmen ohne zu brechen als beispielsweise der Brustbereich. Besonders schwach in diesem Sinne ist der Abdomen- oder Bauchbereich ausgebildet, in dem sich Körperorgane ohne nennenswerten Skelettschutz befinden.

Die derzeitigen Polsterungen von Fahrzeugtürinnenseiten nehmen auf diese Besonderheiten keine Rücksicht, da sie auf der gesamten Fläche im wesentlichen mit gleicher Steifigkeit ausgelegt sind (Siehe auch z.B. die GB-A-1 441 598). Auch das Deformationsglied nach der genannten Vorveröffentlichung berücksichtigt nicht die unterschiedliche Widerstandsfähigkeit der einzelnen Körperregionen. Wie bereits ausgeführt, wirkt sie lediglich im Brustbereich.

Aufgabe der Erfindung ist es, eine gattungsgemäße Fahrzeugtür so auszugestalten, daß die deformierbare Türinnenseite der Anatomie des menschlichen Körpers besser gerecht wird.

Die Aufgabe wird erfindungsgemäß gelöst mit den Merkmalen des Hauptanspruchs. Weitere Ausgestaltungen der Erfindung ergeben sich aus den Unteransprüchen.

Die Innenseite, die als Polsterung dient, weist bei der erfindungsgemäßen Fahrzeugtür im wesentlichen drei deformierbare Abschnitte auf mit unterschiedlichen Steifigkeiten. Im ersten und unteren Abschnitt, der dem Becken des Fahrzeuginsassens benachbart liegt, ist die höchste Steifigkeit vorgesehen. Eine geringere Steifigkeit sieht der obere, dem Brustbereich des Fahrzeuginsassens nächstliegende Abschnitt vor. Schließlich ist der mittlere Bereich der Fahrzeuginnentür besonders weich ausgelegt, um den Abdomenbereich des Fahrzeuginsassens abfangen zu können.

In einer zweckmäßigen Ausgestaltung geht die Erfindung von der Überlegung aus, daß große Fahrzeuginsassen als Fahrer den Sitz weiter nach hinten verstellen gegenüber kleinen Fahrzeuginsassen. Außerdem ist im allgemeinen davon auszugehen, daß große Fahrzeuginsassen eine größere Masse aufweisen und damit bei einem Seitenaufprall mit höherer Kraft gegen die Türinnenseite geschleudert werden. Die Türinnenseite wird diesem Umstand dadurch gerecht, daß sich die deformierbaren Abschnitte zum hinteren Türrand hin in ihren Steifigkeiten erhöhen.

Als besonders vorteilhaft hat es sich erwiesen, die Innenseite als eine strukturierte Deformationsplatte auszulegen. Diese Deformationsplatte ist mit einer als Türinnenverkleidung dienenden Deckfolie versehen. Dabei kann die Deckfolie und die Deformationsplatte als einstückiges oder integriertes Formteil ausgebildet sein. In diesem Fall läßt sich diese Baueinheit besonders einfach als Kunststoffschaumteil herstellen.

Es könnte doch auch zweckmäßig sein, die Deformationsplatte als getrenntes Bauteil auszulegen, das sich beispielsweise im Blasverfahren als Kunststoffteil herstellen läßt. Wählt man dieses Herstellungsverfahren, besteht die Möglichkeit, bei entsprechender Gestaltung in einem Arbeitsgang sowohl die Deformationsplatte für die linke als auch für die rechte Fahrzeugtür aufzuformen.

Ungeachtet der einzelnen Herstellungsmöglichkeiten kann das Formteil, je nach Anforderung, in allen gängigen Materialien, wie Thermoplaste, Aluminium, Kohle- und Polyamidfaser verstärkte Harze usw. ausgeführt sein.

Zweckmäßigerweise weist die Deformationsplatte eine Hohlkammerstruktur auf, deren Hohlkammerquerschnitte sich rechteckig, kreisförmig, elliptisch, dreieckig, rautenförmig usw. ausbilden lassen. Die Form des Hohlkörperquerschnitts richtet sich dabei wiederum allein nach den jeweils gestellten Anforderungen. Durch die Verwendung einer Hohlkammerstruktur lassen sich die benötigten Steifigkeiten über die Aussparungen abstimmen. Dabei gleicht das Kraft-Weg-Verhalten von Hohlkammerstrukturen einer konstanten Kennung, wodurch eine optimale Energieaufnahme über einen großen Verformungsweg gewährleistet ist. Im Gegensatz zu einem völlig ausgeschäumten Polster gehen Hohlkammerstrukturen erst bei sehr großen Umformungsgraden auf Block. Desweiteren läßt sich die Hohlkammerstruktur im Vergleich zu einer Vollschaumausführung leichter und billiger ausführen. Darüber hinaus verschaffen Hohlkammerstrukturen bei entsprechender Auslegung Platz für die Türeinbauteile, wie Fensterheber usw.

Schließlich läßt sich durch definierte Soll-Knickstellen in den einzelnen Kammerwänden des Hohlprofils das Deformationsverhalten der Türinnenseite noch genauer einstellen.

Weitere vorteilhafte Ausgestaltungen der Erfindung ergeben sich aus der nachfolgenden Beschreibung mehrerer Ausführungsbeispiele und der dazugehörigen Zeichnung. Es zeigt:

Fig. 1    eine seitliche Fahrzeugtür von innen gesehen;

Fig. 2    die Fahrzeugtür im Schnitt II-II nach Fig. 1;

Fig. 3    eine ähnliche Schnittdarstellung wie Fig. 2 einer weiteren Ausgestaltung einer Fahrzeugtür in vergrößertem Maßstab;

Fig. 4    die einheitliche Ausgestaltung einer Deformationsplatte für die linke und rechte Fahrzeugtür und

Fig. 5    ein Stützteil in der Hohlkammerstruktur mit Soll-Knickstellen entsprechend dem Schnitt V-V nach Fig. 2.

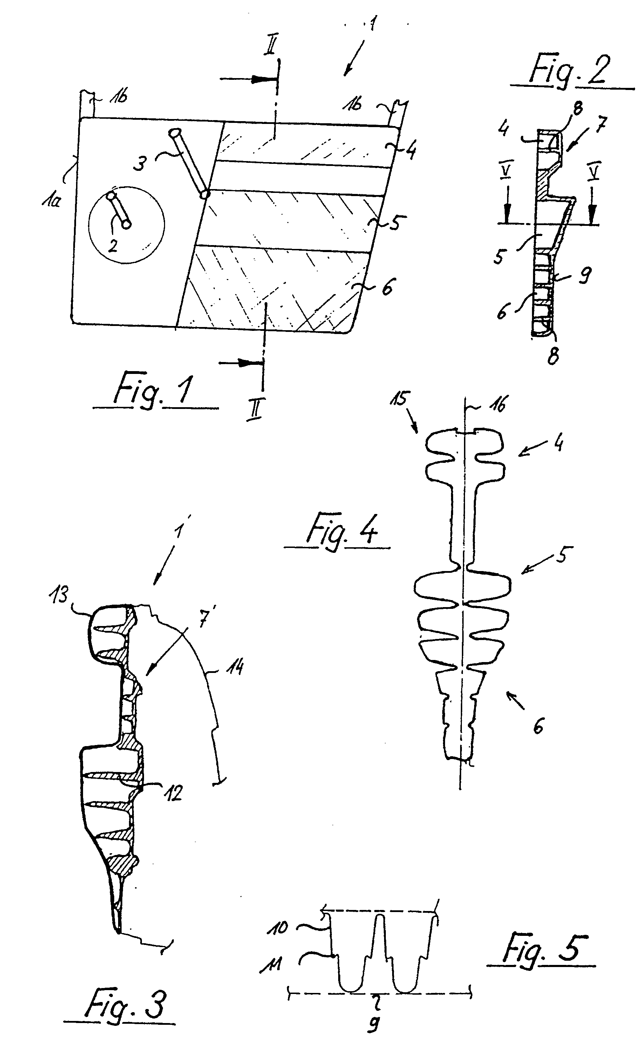

Die in Fig. 1 schematisch dargestellte Fahrzeugtür soll eine vordere, seitliche Tür 1 eines nicht weiter dargestellten Personenkraftwagens sein. Sie ist dabei über nicht erkennbare Scharniere mit ihrem vorderen Türrand 1a an der A-Säule der Fahrzeugkarosserie angelenkt. Außerdem läßt die Fahrzeugtür 1, die ihre Innenseite zeigt, bruchstückhaft einen Fensterrahmen 1b erkennen.

Die Innenseite der Fahrzeugtür ist aufgeteilt in einen vorderen, dem Türrand 1a benachbarten Abschnitt und einen hinteren Abschnitt. Im vorderen Abschnitt sind eine Kurbel 2 für das Heben und Senken der Fensterscheibe und ein Zuzieh- und Haltegriff angeordnet. Der hintere Abschnitt der Türinnenseite dient als Polsterung und läßt sich unter Energieverzehr deformieren. Er weist im wesentlichen drei horizontal verlaufende parallele Abschnitte 4, 5 und 6 auf. Diese Abschnitte 4, 5 und 6 liegen benachbart eines nicht erkennbaren Fahrzeugsitzes bzw. einer darauf Platz nehmenden Person. Dabei liegt der Abschnitt 6 in etwa in der Höhe des Beckenbereichs des Fahrzeuginsassen, der Abschnitt 5 im Bereich des Abdomens und der Abschnitt 4 schließlich im Bereich der Brust.

Wie Fig. 2 zeigt, besteht dieser hintere Teil der Fahrzeuginnenseite aus einer einstückigen, als Hohlkammerstruktur ausgebildeten Deformationsplatte 7, die für die einzelnen Abschnitte 4, 5, 6 unterschiedliche Hohlkammerprofile aufweist. Dabei ist das Hohlkammerprofil des Abschnitts 6, das dem Beckenbereich des Fahrzeuginsassen zugeordnet ist, am steifesten ausgelegt. Die Steifigkeit des Abschnittes 4 für den Brustbereich liegt demgegenüber etwas niedriger und schließlich hat der Abschnitt 5 für den Abdomenbereich die geringste Steifigkeit. Den Grad der jeweiligen Steifigkeit sollen in Fig. 2 die Anzahl der Querstege 8 verdeutlichen. Zur Fahrzeuginnenseite weist die Deformationsplatte 7 eine Deckfolie 9 auf, die ein gefälliges Aussehen vermittelt.

Nach Fig. 2 ist im Bereich des Abschnittes 5 eine durchgehende Hohlkammer erkennbar. Es ist jedoch möglich, wie Fig. 5 zeigt, diese Hohlkammer durch ein wellenförmiges Stützteil 10 zu versteifen, das mit seinen Wellenbergen zum Fahrzeuginsassen zeigt. Für ein definiertes Verformungsverhalten weist dieses Stützteil 10 an seinen Flanken Soll-Knickstellen 11 auf.

Die Innenseite der Fahrzeugtür 1' nach Fig. 3, von der auch abschnittsweise ein Türaußenblech 14 angedeutet ist, hat einen etwas anderen Aufbau. Zunächst einmal wird die geringere Steifigkeit im Abdomenbereich durch lange leicht verformbare Querstege 12 ermöglicht. Des weiteren ist die Trägerplatte 7' als getrenntes Bauteil ausgelegt, an dem nachträglich eine Türinnenverkleidung 13 befestigt wird. Bei diesem Aufbau ist jedoch darauf zu achten, daß die Türinnenverkleidung 13 eine ausreichende Festigkeit aufweist, um zu verhindern, daß die Stege 12, bevor sie abbrechen, durch sie hindruchstoßen können. Eine derartige Deformationsplatte 7 ermöglicht eine Materialwahl losgelöst von der Verkleidung 13. Außerdem läßt sie eine größere Freiheit in der Wahl ihres Herstellungsverfahrens zu.

In Fig. 4 wird dies verdeutlicht. Hier ist ein Formkörper 15; aus Kunststoff erkennbar, der entlang der Achse 16 symmetrisch aufgebaut ist und eine Deformationsplatte für die linke Tür und eine Deformationsplatte für die rechte Tür beinhaltet. Dieser Formkörper 15 ist durch ein Blasformverfahren hergestellt worden, und durch nachträgliches Trennen entlang der Linie 16 werden die beiden Deformationsplatten erhalten. Auf diese Weise lassen sich die Deformationsplatten besonders günstig herstellen.

## Ansprüche

1.    Seitliche Fahrzeugtür, insbesondere für Personenkraftwagen, deren einem Fahrzeugsitz zugewandte Innenseite beim Aufprall des Körpers eines auf dem Fahrzeugsitz sich befindlichen Insassen zumindest abschnittsweise unter Energieverzehr deformierbar ausgelegt ist, dadurch gekennzeichnet, daß die Steifigkeit der energieverzehrenden Abschnitte (4, 5, 6) der unterschiedlichen Widerstandsfähigkeit der einzelnen, ihnen benachbarten Körperregionen des Fahrzeuginsassen angepaßt ist und im Abdomenbereich des Fahrzeuginsassen geringere und im Becken- und Brustbereich höhere Werte aufweist.

2. Fahrzeugtür nach Anspruch 1, mit einem in Fahrzeuglängsrichtung verstellbaren Fahrzeugsitz, dadurch gekennzeichnet, daß die unterschiedlichen Steifigkeiten der Innenseite zum hinteren Türrand hin zunehmen.

3. Fahrzeugtür nach Anspruch 1 oder 2, dadurch gekennzeichnet, daß die Innenseite der Fahrzeugtür (1) als eine mit einer Deckfolie (9) verkleidete, strukturierte Deformationsplatte (7, 7') ausgelegt ist.

4. Fahrzeugtür nach Anspruch 3, dadurch gekennzeichnet, daß die Innenseite durch ein integriertes Formteil gebildet ist.

5. Fahrzeugtür nach Anspruch 3, dadurch gekennzeichnet, daß die Deformationsplatte (7') als ein von der Deckfolie (9) getrenntes Bauteil vorgesehen ist.

6. Fahrzeugtür nach einem der Ansprüche 4 oder 5, dadurch gekennzeichnet, daß die Deformationsplatte (7,7') eine Hohlkammerstruktur aufweist.

7. Fahrzeugtür nach Anspruch 6, dadurch gekennzeichnet, daß die Hohlkammerstruktur ein Stützteil (10) mit definierten Soll-Bruchstellen (11) vorsieht.

## Claims

1. A side vehicle door, in particular for passenger vehicles, the inner side of which, facing a vehicle seat, is designed so as to be deformable in the case of impact of the body of an occupant of the vehicle seat, at least in sections, under energy dissipation, characterised in that the rigidity of the energy-dissipating sections (4, 5, 6) is adapted to the differing capacity for resistance of the individual areas of the body of the occupant of the vehicle adjacent thereto, and in the abdominal area of the occupant of the vehicle has lower values and in the pelvic and chest areas has higher values.

2. A vehicle door according to Claim 1, with a vehicle seat which is adjustable in longitudinal direction of the vehicle, characterised in that the differing rigidities of the inner side increase towards the rear rim of the door.

3. A vehicle door according to Claim 1 or 2, characterised in that the inner side of the vehicle door (1) is constructed as a structured deformation plate (7, 7') lined with a cover film (9).

4. A vehicle door according to Claim 3, characterised in that the inner side is formed by an integrated shaped part.

5. A vehicle door according to Claim 3, characterised in that the deformation plate (7') is provided as a separate component from the cover film (9).

6. A vehicle door according to one of Claims 4 or 5, characterised in that the deformation plate (7,7') has a hollow chambered structure.

7. A vehicle door according to Claim 6, characterised in that the hollow-chambered structure provides a support piece (10) with defined nominal break sites (11).

## Revendications

1. Portières latérales de véhicules, particulièrement pour voitures particulières, dont le côté intérieur tourné vers le siège du véhicule est réalisé déformable au moins par sections en absorbant de l'énergie sous l'effet au choc du corps d'un occupant se trouvant sur le siège du véhicule, caractérisées en ce que la rigidité des sections (4, 5, 6) absorbantes d'énergie est adaptée a la capacité de résistance variable des différentes régions du corps de l'occupant du véhicule qui leur sont voisines et elle comporte dans la région de l'abdomen de l'occupant du véhicule une valeur plus faible et dans la région du bassin et du thorax des valeurs plus élevées.

2. Portière de voiture selon la revendication 1, avec un siège de véhicule réglable dans le sens longitudinal du véhicule, caractérisée en ce que les rigidités variables du côté intérieur augmentent en direction du bord arrière de la portière.

3. Portière de véhicule selon les revendications 1 ou 2, caractérisée en ce que la face intérieure de la portière du véhicule (1) est réalisée en plaque de déformation structurée (7, 7'), habillée avec une feuille de recouvrement (9).

4. Portière de véhicule selon la revendication 3, caractérisée en ce que la face intérieure est formée par une pièce moulée intégrée.

5. Portière de véhicule selon la revendication 3, caractérisée en ce que la plaque de déformation (7') est prévue comme une pièce de construction séparée de la feuille de recouvrement (9).

6. Portière de véhicule selon une des revendications 4 ou 5, caractérisée en ce que la plaque de déformation (7, 7') comporte une structure de chambre creuse.

7. Portière de véhicule selon la revendication 6, caractérisée en ce que la structure de chambre creuse prévoit une pièce d'appui (10) avec un emplacement théorique de brisure programmé (11).

*Fig. 2*

*Fig. 1*

*Fig. 4*

*Fig. 3*

*Fig. 5*